# EUROPEAN PATENT APPLICATION

(11) **EP 2 441 322 A2**
(43) Date of publication of application: **18.04.2012**
(21) Application number: 11184816.4
(22) Date of filing: 12.10.2011
(51) Int. Cl.: A01G 1/12

(54) **Device and method for waste management**

(30) Priority: 14.10.2010 US 904510
(71) Applicant: DEERE & COMPANY, Moline, Illinois 61265-8098 (US)
(72) Inventor: Anderson, Noel W, Fargo, ND North Dakota 58102 (US)
(74) Representative: Dehnhardt, Florian Christopher

(57) **Abstract**

The illustrative embodiments of the present invention provide a method and apparatus for managing a plurality of items. A housing (206,302) has an opening (216,316) and is configured to receive a plurality of items (218,314) through the opening (216,316) of the housing (206,302). A first bag (220,306) has a first end (224,318) that is sealed and an opening (222,316). The opening (222,316) of the first bag (220,306) is associated with the opening (216,316) of the housing (206,302). A sensor system (210,308) configured to detect a selected condition for the first bag (220,306). A sealing system (212,310) configured to seal a second end (235,317) for the first bag (220,306) in response to the sensor system (210,308) detecting the selected condition. An ejection system (260) is configured to transfer the first bag (220,306) to a desired location in response to the sealing system (212,310) sealing the second end (235,317) for the first bag (220,306).

## Description

The present invention is related generally to managing items in an area. More specifically, the present disclosure relates to a method and an apparatus for removing undesired items from an area.

Undesired material may accumulate in an area. This undesired material may reduce the safety and/or aesthetic appearance of the area. For example, the undesired material may be waste material. Waste material may accumulate in a yard. The waste material may include, for example, without limitation, grass clippings, leaves that have fallen from trees, rocks, dirt, trash, and/or other suitable items. Undesired material may also be present in other areas, such as a room in a home. In a room in a home, undesired material may consist of undesired packaging, paper, clothing, dust, hair, and/or other suitable items.

Undesired material is removed from one area by moving the undesired material to a second area designated to store the undesired material. The second area may be an area in a trash can, a compost pile, a landfill, or some other suitable type of area for storing the undesired material.

Typically, the removal of undesired material from an area is performed by a person. As one illustrative example, undesired material accumulates on a ground in an area. A person picks up the undesired material from the ground and moves the undesired material to an area designated to store the undesired material.

In some examples, a person may temporarily store the undesired material in a temporary holding area prior to moving the undesired material to the designated area for the undesired material. Thereafter, the undesired material may be moved to the designated area for permanent storage. For example, a person may move undesired material from the ground in an area to a trash can. The person may then move the trash can to a second location. At the second location, another person operating a garbage truck moves the undesired material into the garbage truck. The garbage truck may be unloaded later at a landfill.

It is therefore the object of the present invention to comply with one or all of these needs.

This object is met according to the invention by the teaching of claims 1 and 15 respectively, while features developing the solution in an advantageous manner are set forth in the further claims.

An embodiment of the present invention provides a method for managing a plurality of items. The plurality of items is received in a first bag through an opening in a housing. The first bag has a first end that is sealed and an opening associated with the opening in the housing. A selected condition for the first bag is detected using a sensor system. In response to a detection of the selected condition for the first bag, a second end for the first bag is sealed. In response to the sealing system sealing the second end for the first bag transferring the first bag to a desired location. The first bag may be biodegradable.

The desired location may be selected from a group consisting of a second vehicle, a receptacle, and a location that meets a number of criteria.

Responsive to the detection of the selected condition for the first bag, an end of a second bag may be sealed, wherein a portion of the first bag between the first sealed end and the second sealed end of the first bag is separated from the first bag to form the second bag.

The portion of the first bag from the first bag to form the second bag may be separated using a separation system, wherein the separation system comprises at least one of a number of cutters, a number of blades, a number of lasers, a number of knives, and a number of sharp edges.

A length of the second bag to a selected length may be extended using an extension system.

The length of the second bag may be measured from the opening of the housing to the first end of the second bag.

The extension system may be selected from a group comprising a pneumatic device and a mechanical press.

The housing, the extension system, the sensor system, and the sealing system may form a bagging system.

A volume of the plurality of items in the first bag may be reduced using a compaction system.

The compaction system may be selected from a group comprising a pneumatic device and a mechanical press.

A path of a leader may be identified using a follower system. The bagging system may be moved along the path traveled by the leader at a selected distance from the leader. The bagging system may be moved along the path of the leader using a propulsion system. A propulsion system may be used moving along a route.

The leader may be selected from a group comprising a human and a leader vehicle.

The sensor system may be selected from a group comprising a weight sensor, a laser, an optical device, an acoustic device, an optical mark, and a radio frequency identification device.

The selected condition may include at least one of a length for the first bag and a weight for the first bag.

The step of sealing the second end for the first bag may be accomplished by adhering a first portion of the first bag to a second portion of the first bag to close the opening of the first bag and seal the portion of the first bag between the first end and the second end of the first bag.

The step of adhering the first portion of the first bag to the second portion of the first bag may be accomplished by heating the first portion of the first bag and the second portion of the first bag to melt the first portion of the first bag and the second portion of the first bag together.

The plurality of items may be directed into the opening of the housing and into the opening of the first bag.

Another embodiment of the present invention provides an apparatus comprising a housing, a first bag, a sensor system, a sealing system, and an ejection system. The housing has an opening and is configured to receive a plurality of items through the opening. The first bag has a first end that is sealed and an opening. The opening of the first bag is associated with the opening of the housing. The sensor system is configured to detect a selected condition for the first bag. The sealing system is configured to seal a second end for the first bag in response to the sensor system detecting the selected condition. The ejection system is configured to transfer the first bag to a desired location in response to the sealing system sealing the second end for the first bag.

The housing, the extension system, the sensor system, and the sealing system may form a bagging system. The bagging system may be associated with a vehicle and further may comprise a follower system associated with the vehicle and configured to identify a path of a leader and a propulsion system associated with the vehicle and configured to move the vehicle and the bagging system along the path of the leader. The bagging system may be associated with a vehicle and further may comprise a propulsion system configured to move the vehicle and the bagging system along a route.

The apparatus may comprise a retrieval mechanism configured to retrieve the plurality of items in an area and to direct the plurality of items into the opening of the housing and through the opening of the first bag.

Yet another embodiment of the present invention provides an autonomous vehicle comprising a processor unit configured to identify a path in an area; a propulsion system configured to move the autonomous vehicle along the path in the area; a housing having an opening configured to receive a plurality of items through the opening; a first bag having a first end that is sealed and an opening, wherein the opening of the first bag is associated with the opening of the housing; a sensor system configured to detect a selected condition for the first bag; a sealing system configured to seal a second end for the first bag in response to the sensor system detecting the selected condition; a retrieval mechanism configured to retrieve the plurality of items in the area and to direct the plurality of items into the opening of the housing and through the opening of the first bag; and an ejection system configured to transfer the first bag to a desired location in response to the sealing system sealing the second end for the first bag.

The desired location may be is selected from a group consisting of a second vehicle, a receptacle, a location outside of the path, and a location that meets a number of criteria.

The sealing system may further be configured to seal an end of a second bag in response to the sensor system detecting the selected condition, wherein a portion of the first bag between the first sealed end and the second sealed end of the first bag is separated from the first bag to form the second bag.

The features, functions, and advantages can be achieved independently in various embodiments of the present invention or may be combined in yet other embodiments in which further details can be seen with reference to the following description and drawings.

The novel features believed characteristic of the illustrative embodiments are set forth in the appended claims. The illustrative embodiments, however, as well as a preferred mode of use, further objectives and advantages thereof, will best be understood by reference to the following detailed description of an illustrative embodiment of the present invention when read in conjunction with the accompanying drawings, wherein:
Figure 1 is a collection environment depicted in accordance with an illustrative embodiment;
Figure 2 is a block diagram of a collection environment depicted in accordance with an illustrative embodiment;
Figure 3 is an illustration of a bagging system depicted in accordance with an illustrative embodiment;
Figure 4 is an illustration of a bagging system with a compactor depicted in accordance with an illustrative embodiment;
Figure 5 is an illustration of a bagging system associated with a vehicle depicted in accordance with an illustrative embodiment;
Figure 6 is a block diagram of a data processing system depicted in accordance with an illustrative embodiment;
Figure 7 is an illustration of a sensor system depicted in accordance with an illustrative embodiment;
Figure 8 is an illustration of a mobility system depicted in accordance with an illustrative embodiment;
Figure 9 is an illustration of a vehicle associated with a bagging system depicted in accordance with an illustrative embodiment;
Figure 10 is an illustration of a collection environment depicted in accordance with an illustrative embodiment;
Figure 11 is an illustration of a flowchart of a process for managing a plurality of items depicted in accordance with an illustrative embodiment; and
Figure 12 is an illustration of flowchart of a process for managing a plurality of items depicted in accordance with an illustrative embodiment.

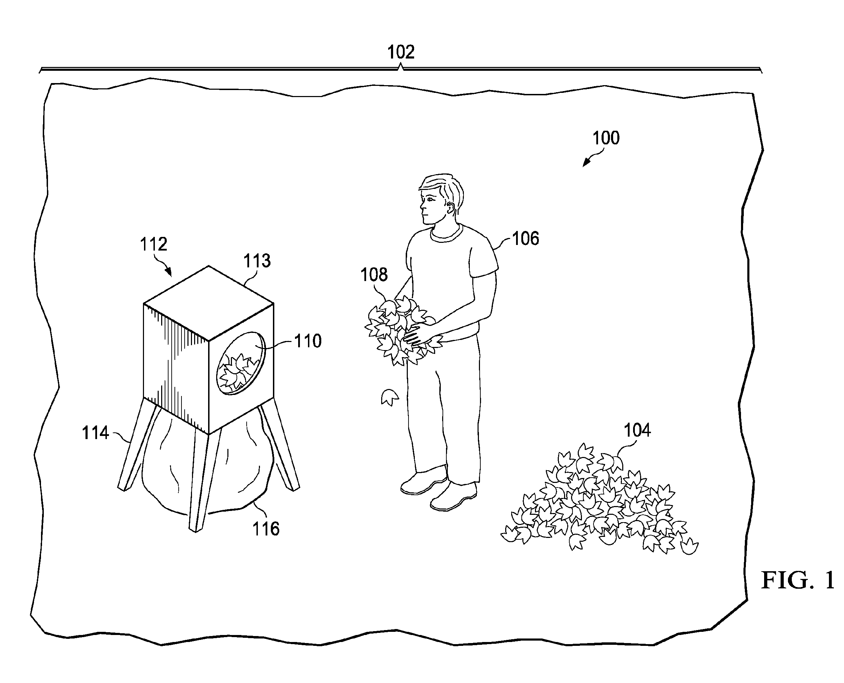

With respect to Figure 1, an illustration of a collection environment is depicted in accordance with an illustrative embodiment. Collection environment 100 includes field 102 in this example.

As illustrated, undesired material may accumulate in field 102. Undesired material may be waste 104 in this example. Person 106 may desire to remove waste 104 from field 102. For example, person 106 picks up portion 108 of waste 104 from field 102. Person 106 then places portion 108 of waste 104 into bagging system 112. As illustrated, bagging system 112 comprises housing 113 with opening 110. Person 106 places portion 108 of waste 104 into opening 110 of housing 113 of bagging system 112. Bagging system 112 may stand on legs 114.

Portion 108 of waste 104 travels through bagging system 112 from opening 110 of housing 113 into bag 116. Bag 116 has an opening associated with bagging system 112. Bag 116 is comprised of biodegradable materials in this illustrative example.

The different illustrative embodiments recognize and take into account a number of different considerations. For example, the different illustrative embodiments recognize that a person may remove undesired material from an area by placing the undesired material into one or more bags. A bag is a non-rigid container having an opening. The different illustrative embodiments recognize and take into account that removing undesired material from an area using bags may be time-consuming.

For example, a bag in which undesired material is stored may become full. A bag may be considered full when the undesired material fills a capacity for the bag. The capacity for the bag is full when the bag is no longer capable of storing additional undesired material in the bag. In some illustrative examples, the capacity of the bag is less than the volume inside the bag. In yet other illustrative examples, the bag may have space inside, but may be unable to hold the additional undesired material without the bag tearing, ripping, breaking, or having some other undesired change to the bag.

The different illustrative embodiments also recognize and take into account that during a process for removing undesired material, a person may stop placing additional undesired material into a bag when the bag becomes full. Thereafter, the bag may be closed and/or sealed. The operator then opens a new bag to store additional undesired material in the new bag. The person may close the bag by tying the bag closed with material from the bag, with a rope, with drawstrings, or with some other suitable material. The different illustrative embodiments recognize and take into account that stopping the process for removing the undesired material to close the bag and open a new bag may be more time-consuming than desired.

The different illustrative embodiments also recognize and take into account that bags are difficult to transport when the bags are full. For example, bags may be larger and/or heavier than desired when full. A person may be unable to carry or move the bags to a designated area for the bags when the bags are larger and/or heavier than desired. Additionally, when a bag is incorrectly closed and/or sealed, the bag may tear allowing the contents of the bag to leave the bag prior to reaching the designated area.

Additionally, the different illustrative embodiments recognize and take into account that oftentimes, bags are not comprised of biodegradable materials. Biodegradable materials are comprised of organic material capable of being consumed by microorganisms. When bags are not comprised of biodegradable materials, microorganisms may not process the bags into compost or other organic material.

Thus, the illustrative embodiments of the present invention provide a method and apparatus for managing a plurality of items. A housing has an opening and is configured to receive a plurality of items through the opening of the housing. A first bag has a first end that is sealed and an opening. The opening of the first bag is associated with the opening of the housing. A sensor system configured to detect a selected condition for the first bag. A sealing system configured to seal a second end for the first bag in response to the sensor system detecting the selected condition. An ejection system is configured to transfer the first bag to a desired location in response to the sealing system sealing the second end for the first bag.

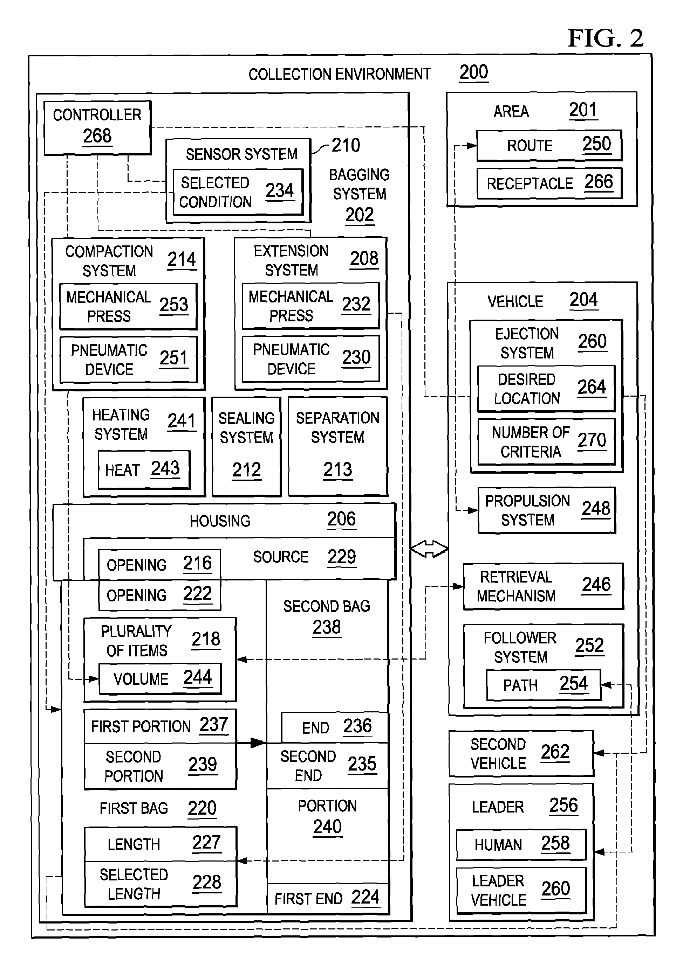

With reference to Figure 2 an illustration of a block diagram of a collection environment is depicted in accordance with an illustrative embodiment. In this illustrative example, collection environment 200 is an example of one implementation for collection environment 100 in Figure 1.

In this illustrative example, collection environment 200 includes area 201. Area 201 may be a field, for example. Area 201 may include bagging system 202 and vehicle 204. As depicted, bagging system 202 may include housing 206, extension system 208, sensor system 210, sealing system 212, separation system 213, and compaction system 214.

In this example, housing 206 has opening 216. Housing 206 is configured to receive plurality of items 218 through opening 216. Plurality of items 218 are items that are to be collected in collection environment 200. As one illustrative example, plurality of items 218 may be undesired material that accumulates in area 201. The undesired material, may be, for example, without limitation, waste material left in area 201. Plurality of items 218 may include, for example, without limitation leaves, grass, weeds, trash, and/or other types of waste material left in a field.

Housing 206 is associated with first bag 220. As used herein, a first component may considered to be associated with a second component by being secured to the second component, bonded to the second component, fastened to the second component, and/or connected to the second component in some other suitable manner. The first component also may be connected to the second component through using a third component. The first component may also be considered to be associated with the second component by being formed as part of and/or an extension of the second component.

In this illustrative embodiment, first bag 220 is a non-rigid container having an opening. In particular, first bag 220 has opening 222. Opening 222 is associated with opening 216 in housing 206. For example, plurality of items 218 received in opening 216 of housing 206 are received in opening 222 of first bag 220. Additionally, first bag 220 has first end 224. First end 224 of first bag 220 is sealed in these examples.

First bag 220 may have a number of different shapes and/or sizes. Further, first bag 220 may be comprised of a number of different types of material. For example, first bag 220 may be comprised of a material, such as a biodegradable material. Of course, in other illustrative examples, first bag 220 may be comprised of other types of materials such as, for example, without limitation, fabric, woven fibers, plastic, silicon, nylon, and/or other suitable types of materials.

In these illustrative examples, extension system 208 is configured to extend length 227 of first bag 220 to selected length 228. Selected length 228 may be selected, for example, to allow a particular volume of plurality of items 218 to be received by first bag 220. As one illustrative example, length 227 of first bag 220 may be extended to selected length 228 such that a selected quantity of plurality of items 218 fit in first bag 220.

In these depicted examples, extension system 208 may be configured to extend length 227 of first bag 220 from source 229. Source 229 may be a source for the material forming first bag 220. For example, source 229 may be a roll of material, a tube of material, or some other suitable source from which first bag 220 may be formed. In these examples, source 229 is associated with housing 206. In particular, source 229 may be associated with opening 216 of housing 206 such that extension system 208 may extend length 227 of first bag 220 from opening 216.

Further, extension system 208 may comprise a number of devices configured to extend length 227 of first bag 220 selected length 228. As one illustrative example, extension system 208 may include pneumatic device 230. Pneumatic device 230 may generate air pressure within first bag 220. This air pressure exerts a pressure on first end 224 to move first end 224 to extend first bag 220 to selected length 228.

As another illustrative example, extension system 208 may include mechanical press 232. Mechanical press 232 may have an extension, such as, for example, a press. Mechanical press 232 may apply mechanical pressure to first end 224 of first bag 220. The mechanical pressure applied to first end 224 may extend length 227 of first bag 220 to selected length 228.

As illustrated in this example, sensor system 210 is associated with first bag 220. Sensor system 210 is configured to monitor for selected condition 234 for first bag 220. In these examples, selected condition 234 may comprise at least one of, for example, without limitation, a weight for first bag 220, a length for first bag 220, volume 244 of plurality of items 218 in first bag 220, and other suitable conditions.

For example, selected condition 234 may be detected by sensor system 210 when plurality of items 218 in first bag 220 has a selected weight. As another example, selected condition 234 may be detected when length 227 of first bag 220 is extended based on the addition of plurality of items 218 in first bag 220.

In response to a detection of selected condition 234, sealing system 212 may seal first bag 220. For example, sealing system 212 is configured to seal second end 235 of first bag 220. Sealing system 212 may seal second end 235 by adhering first portion 237 of first bag 220 to second portion 239 of first bag 220. For example, heating system 241 may apply heat 243 to first portion 237 and second portion 239 of first bag 220 to melt first portion 237 and second portion 239 together. In this manner, first portion 237 may be adhered to second portion 239 of first bag 220.

As another example, an adhesive may be applied to first portion 237 and second portion 239. First portion 237 and second portion 239 of first bag 220 may be brought into contact with each other such that adhesive may hold first portion 237 and second portion 239 together. In this manner, first portion 237 may be adhered to second portion 239 using the adhesive.

In yet another example, a cord may be wrapped around the circumference of the bag and constricted to form first end 224. The ends of the cord are connected together to make the constriction permanent. The cord may be a suitable material, such as, without limitation, wire, string, twine, plastic, or nylon.

Further, in response to the detection of selected condition 234, sealing system 212 is configured to seal end 236 of second bag 238. In these examples, end 236 may be the location for second end 235 for first bag 220. Second bag 238 may be formed, in these illustrative examples, by separating portion 240 of first bag 220 from first bag 220. Portion 240 is the portion of first bag 220 between first end 224 and second end 235.

In these depicted examples, portion 240 of first bag 220 is separated from first bag 220 using separation system 213. Separation system 213 comprises a number of different devices configured to separate portion 240 of first bag 220 from first bag 220. For example, separation system 213 may comprise, without limitation, a number of cutters, a number of blades, a number of lasers, a number of knives, a number of sharp edges, and/or other suitable types of cutting devices.

In these illustrative examples, compaction system 214 is configured to compact plurality of items 218 in first bag 220. In other words, compaction system 214 is configured to reduce volume 244 of plurality of items 218 in first bag 220. Compaction system 214 may comprise any number of devices configured reduce volume 244 of plurality of items 218 in first bag 220. For example, compaction system 214 may include pneumatic device 251, mechanical press 253, and/or other suitable devices.

In these depicted examples, bagging system 202 is associated with vehicle 204. For example, bagging system 202 may be located in vehicle 204 or attached to vehicle 204. Vehicle 204 may be configured to move bagging system 202 within collection environment 200. Vehicle 204 may be any type of vehicle including, without limitation, a combine, a tractor, a semi-autonomous vehicle, a fully autonomous vehicle, a mobile robotic machine, a service robot, a field robot, a robotic mower, a robotic vacuum cleaner, a robotic sweeper, and/or any other autonomous vehicle.

As used herein, a vehicle may be considered to be "autonomous" by being capable of operating without human intervention, aid, and/or supervision. Thus, a vehicle may be "autonomous" in that the vehicle is capable of performing a task without human intervention, aid, and/or supervision. Also as used herein, a vehicle may be considered to be "semi-autonomous" by being capable of performing only a portion of tasks without human intervention, aid, and/or supervision.

In this illustrative example, vehicle 204 may have retrieval mechanism 246. Retrieval mechanism 246 is configured to retrieve plurality of items 218 in area 211 in which vehicle 204 moves. Further, retrieval mechanism 246 is configured to direct plurality of items 218 into opening 216 of housing 206. Retrieval mechanism 246 may take the form of, for example, a mechanical arm with an end effector attached to the arm. The end effector may be configured to retrieve plurality of items 218. Other examples of retrieval mechanism 246 may include, without limitation, a vacuum, a number of rotating brushes, or rotating metal tines.

Additionally, vehicle 204 may also have propulsion system 248. Propulsion system 248 is configured to move vehicle 204 and bagging system 202 along route 250 in collection environment 200.

In these depicted examples, vehicle 204 also has follower system 252. Follower system 252 is configured to identify path 254 of leader 256. Leader 256 is an object that travels along path 254 that may be followed. In these illustrative examples, follower system 252 follows path 254 of leader 256. Leader 256 may be, for example, without limitation, human 258, leader vehicle 260, or some other suitable type of leader. Propulsion system 248 is configured to move vehicle 204 along path 254 of leader 256 in these examples.

Additionally, in these illustrative embodiments, vehicle 204 has ejection system 260. Ejection system 260 transfers first bag 220 from bagging system 202 to desired location 264 which is a direction and a distance away from bagging system 202. Desired location 264 may be predefined, second vehicle 262, receptacle 266, or may be determined by controller 268. Controller 268 may determine desired location 264 based on number of criteria 270. Number of criteria 270 may be based on what portions of area 201 have been previously covered by vehicle 204 traversing route 250.

In these illustrative examples, first bag 220 may be ejected behind or parallel to the direction of travel of vehicle 204. Also, first bag 220 may be transferred to a portion of area 201 which has already been covered by vehicle 204 traversing route 250. Also, first bag 220 may be transferred to a path not in the path of any person or vehicle following behind vehicle 204. In different illustrative embodiments, first bag 220 may be ejected to other suitable locations in area 201. In yet another illustrative embodiment, first bag 220 may be transferred directly to second vehicle 262 operating in area 201. Second vehicle 262 may then transport first bag 220 to another location.

In these depicted examples, bagging system 202 includes controller 268. Controller 268 may record data related to operation of sealing system 212, separation system 213, and other components of bagging system 202 or vehicle 204. Data may come from sensor system 210 or other sensors. Data may include, without limitation, location in area 201 where second end 235 of first bag 220 was sealed, total number of sealings, or selected condition 234. Controller 268 may transmit data to second vehicle 262 working within area 201 or to a recipient outside area 201.

The illustration of collection environment 200 in Figure 2 is not meant to imply physical or architectural limitations to the manner in which different illustrative embodiments may be implemented. Other components in addition to, and/or in place of, the ones illustrated may be used. Some components may be unnecessary in some illustrative embodiments. Also, the blocks are presented to illustrate some functional components. One or more of these blocks may be combined and/or divided into different blocks when implemented in different illustrative embodiments.

For example, in some illustrative embodiments, sensor system 210 may not be included in bagging system 202. In other illustrative examples, extension system 208 and compaction system 214 may be part of the same system. In a similar manner, in some illustrative examples, sealing system 212 and separation system 213 may be part of the same system.

In still other illustrative examples, bagging system 202 may be associated with a controller, such as controller 268. Controller 268 may be, for example, a processor unit. Controller 268 may be configured to control operations performed by sensor system 210, sealing system 212, and/or separation system 213.

For example, controller 268 may control sealing system 212 such that sealing system 212 seals second end 235 of first bag 220 in response to the occurrence of an event. In these illustrative examples, the event may be, for example, a period event or a non-periodic event. The periodic event may be, for example, the lapse of a timer.

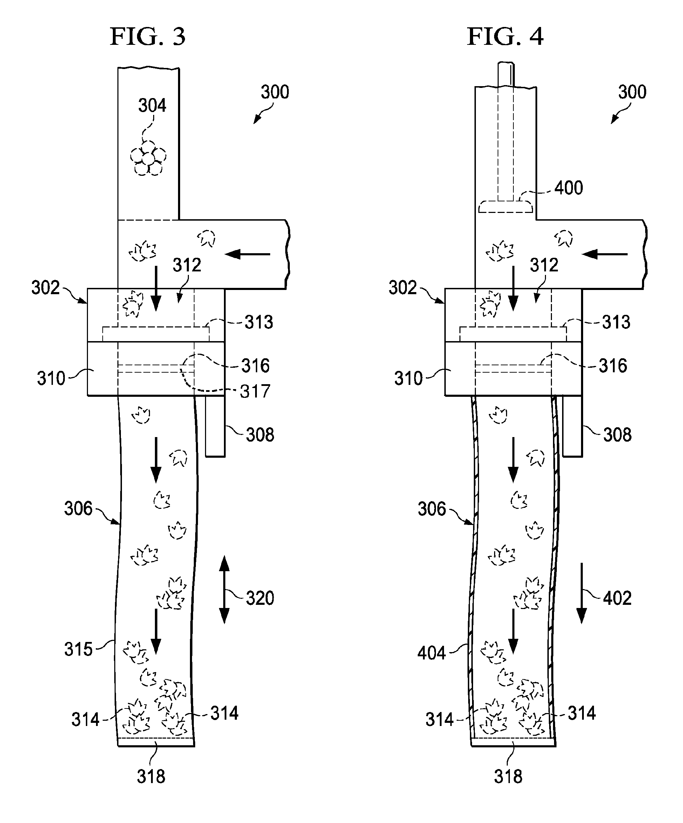

With reference now to Figure 3, an illustration of a bagging system is depicted in accordance with an illustrative embodiment. In this illustrative example, bagging system 300 is an example of one implementation for bagging system 202 in Figure 2.

Bagging system 300 includes housing 302, extension system 304, bag 306, sensor system 308, and sealing system 310. Housing 302 may be an example of one implementation for housing 206 in Figure 2. In this depicted example, extension system 304, bag 306, sensor system 308, and sealing system 310 are associated with housing 302.

Housing 302 has opening 312. Opening 312 in housing 302 is configured to receive plurality of items 314. Housing 302 includes roll of material 313 that extends from opening 312 to form bag 306.

In this illustrative example, extension system 304 is configured to pull material from roll of material 313 to extend a length of bag 306 to a selected length. Bag has walls 315 and opening 316 associated with opening 312 of housing 302. Bag 306 extends from opening 316 to first end 318. First end 318 is sealed in this depicted example.

Extension system 304 may be a pneumatic device, as shown in this illustrative example, configured to extend the length of bag 306. Bag 306 is configured to receive plurality of items 314 through opening 316 of bag 306 and hold plurality of items 314 in bag 306.

Sensor system 308 is configured to detect a selected condition for bag 306 when plurality of items 314 is in bag 306. The selected condition may be, for example, without limitation, a weight of bag 306, a length of bag 306, a length of a portion of bag 306, and/or some other suitable type of condition. In these illustrative examples, sensor system 308 is positioned directly below sealing system 310. In other illustrative embodiments, sensor system 308 may be positioned in other locations along bag 306.

In response to sensor system 308 detecting the selected condition for bag 306, sealing system 310 is configured to close opening 316 of bag 306 by sealing a second end 317 of bag 306. Sealing system 310 may be an example of one implementation for sealing system 212 in Figure 2. In these illustrative examples, sealing system 310 may be positioned at different locations along axis 320 such that second end for bag 306 may be formed at different locations of bag 306 along axis 320.

With reference now to Figure 4, an illustration of a bagging system with a compactor is depicted in accordance with an illustrative embodiment. In this illustrative example, bagging system 300 from Figure 3 is depicted having compaction system 400 in the place of extension system 304 in Figure 3.

In this depicted example, compaction system 400 compacts plurality of items 314 in bag 306. Compaction system 400 may be an example of one implementation for compaction system 214 in Figure 2. Compaction system 400 compacts plurality of items 314 to reduce a volume of plurality of items 314 in bag 306.

For example, compaction system 400 exerts a force on plurality of items 314 in the direction of arrow 402. The exertion of force on plurality of items 314 in the direction of arrow 402 causes a volume of plurality of items 314 to be reduced.

Additionally, in this illustrative example, bag 306 may have walls 404. Walls 404 of bag 306 may be reinforced as compared to walls 315 of bag 306 in Figure 3. Walls 404 may be reinforced to withstand the force exerted by compaction system 400.

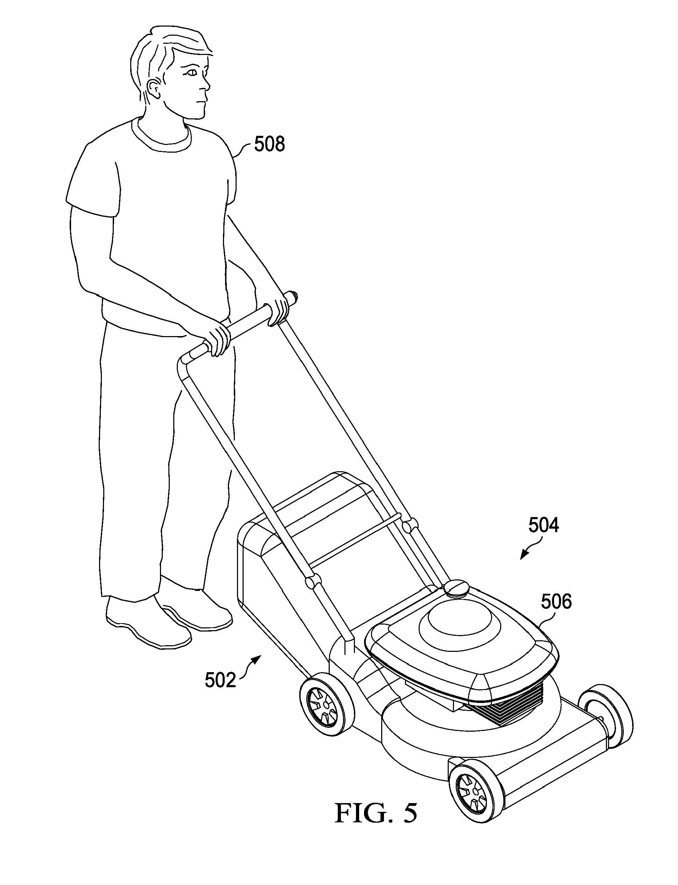

With reference now to Figure 5, an illustration of a bagging system associated with a vehicle is depicted in accordance with an illustrative embodiment. In this illustrative example, bagging system 300 is an example of one implementation for bagging system 202 in Figure 2.

In this illustrative example, bagging system 502 is associated with vehicle 504. Vehicle 504 takes the form of lawnmower 506 in this illustrative example. Lawnmower 506 is configured to mow a lawn as lawnmower 506 is moved by person 508.

In this depicted example, lawnmower 506 generates grass clippings as lawnmower 506 mows a lawn. These grass clippings may be collected by bagging system 502. In this illustrative example, bagging system 502 is an example of one implementation for bagging system 202 in Figure 2. Further, bagging system 502 may be implemented using bagging system 300 in Figure 3 and/or bagging system 300 in Figure 4.

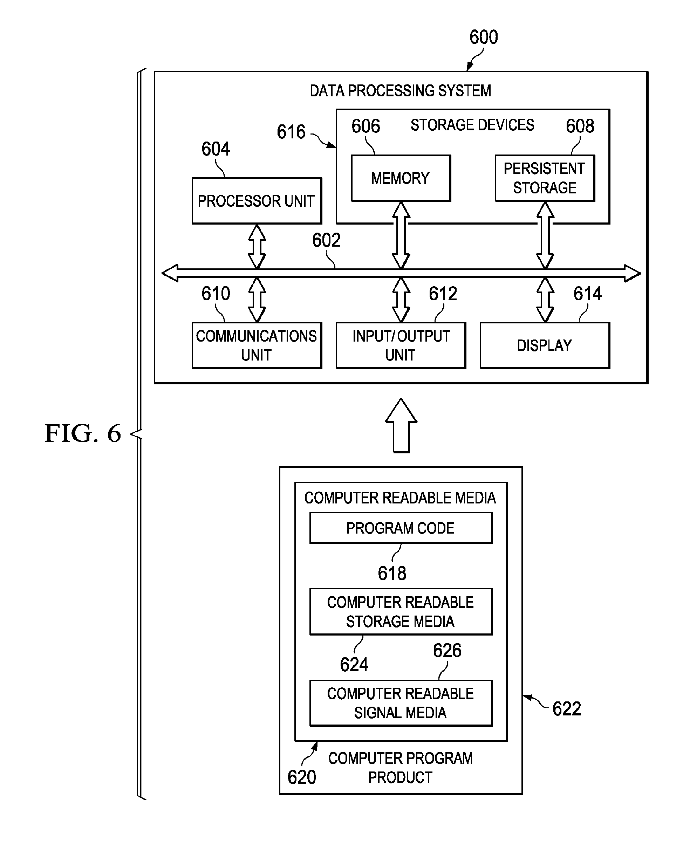

With reference now to Figure 6, a block diagram of a data processing system is depicted in accordance with an illustrative embodiment. Data processing system 600 is an example of a controller, such as controller 268 in Figure 2, in which computer usable program code or instructions implementing the processes may be located for the illustrative embodiments.

In this illustrative example, data processing system 600 includes communications fabric 602, which provides communications between processor unit 604, memory 606, persistent storage 608, communications unit 610, input/output (I/O) unit 612, and display 614.

Processor unit 604 serves to execute instructions for software that may be loaded into memory 606. Processor unit 604 may be a set of one or more processors or may be a multi-processor core, depending on the particular implementation. Further, processor unit 604 may be implemented using one or more heterogeneous processor systems in which a main processor is present with secondary processors on a single chip. As another illustrative example, processor unit 604 may be a symmetric multi-processor system containing multiple processors of the same type.

Memory 606 and persistent storage 608 are examples of storage devices 616. A storage device is any piece of hardware that is capable of storing information, such as, for example without limitation, data, program code in functional form, and/or other suitable information either on a temporary basis and/or a permanent basis. Memory 606, in these examples, may be, for example, a random access memory or any other suitable volatile or non-volatile storage device. Persistent storage 608 may take various forms depending on the particular implementation. For example, persistent storage 608 may contain one or more components or devices. For example, persistent storage 608 may be a hard drive, a flash memory, a rewritable optical disk, a rewritable magnetic tape, or some combination of the above. The media used by persistent storage 608 also may be removable. For example, a removable hard drive may be used for persistent storage 608.

Communications unit 610, in these examples, provides for communications with other data processing systems or devices. In these examples, communications unit 610 is a network interface card. Communications unit 610 may provide communications through the use of either or both physical and wireless communications links.

Input/output unit 612 allows for input and output of data with other devices that may be connected to data processing system 600. For example, input/output unit 612 may provide a connection for user input through a keyboard, a mouse, and/or some other suitable input device. Further, input/output unit 612 may send output to a printer. Display 614 provides a mechanism to display information to a user.

Instructions for the operating system, applications and/or programs may be located in storage devices 616, which are in communication with processor unit 604 through communications fabric 602. In these illustrative examples, the instructions are in a functional form on persistent storage 608. These instructions may be loaded into memory 606 for execution by processor unit 604. The processes of the different embodiments may be performed by processor unit 604 using computer implemented instructions, which may be located in a memory, such as memory 606.

These instructions are referred to as program code, computer usable program code, or computer readable program code that may be read and executed by a processor in processor unit 604. The program code in the different embodiments may be embodied on different physical or tangible computer readable media, such as memory 606 or persistent storage 608.

Program code 618 is located in a functional form on computer readable media 620 that is selectively removable and may be loaded onto or transferred to data processing system 600 for execution by processor unit 604. Program code 618 and computer readable media 620 form computer program product 622 in these examples. In one example, computer readable media 620 may be computer readable storage media 624 or computer readable signal media 626. Computer readable storage media 624 may include, for example, an optical or magnetic disk that is inserted or placed into a drive or other device that is part of persistent storage 608 for transfer onto a storage device, such as a hard drive, that is part of persistent storage 608. Computer readable storage media 624 also may take the form of a persistent storage, such as a hard drive, a thumb drive, or a flash memory, that is connected to data processing system 600. In some instances, computer readable storage media 624 may not be removable from data processing system 600.

Alternatively, program code 618 may be transferred to data processing system 600 from computer readable media 620 through a communications link to communications unit 610 and/or through a connection to input/output unit 612. The communications link and/or the connection may be physical or wireless in the illustrative examples. The computer readable media also may take the form of non-tangible media, such as communications links or wireless transmissions containing the program code.

In some illustrative embodiments, program code 618 may be downloaded over a network to persistent storage 608 from another device or data processing system for use within data processing system 600. For instance, program code stored in a computer readable storage medium in a server data processing system may be downloaded over a network from the server to data processing system 600. The data processing system providing program code 618 may be a server computer, a client computer, or some other device capable of storing and transmitting program code 618.

The different components illustrated for data processing system 600 are not meant to provide architectural limitations to the manner in which different embodiments may be implemented. The different illustrative embodiments may be implemented in a data processing system including components in addition to or in place of those illustrated for data processing system 600. Other components shown in Figure 6 can be varied from the illustrative examples shown. The different embodiments may be implemented using any hardware device or system capable of executing program code. As one example, the data processing system may include organic components integrated with inorganic components and/or may be comprised entirely of organic components excluding a human being. For example, a storage device may be comprised of an organic semiconductor.

As another example, a storage device in data processing system 600 is any hardware apparatus that may store data. Memory 606, persistent storage 608 and computer readable media 620 are examples of storage devices in a tangible form.

In another example, a bus system may be used to implement communications fabric 602 and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory 606 or a cache such as found in an interface and memory controller hub that may be present in communications fabric 602.

As used herein, the phrase "at least one of", when used with a list of items, means that different combinations of one or more of the items may be used and only one of each item in the list may be needed. For example, "at least one of item A, item B, and item C" may include, for example, without limitation, item A or item A and item B. This example also may include item A, item B, and item C or item B and item C.

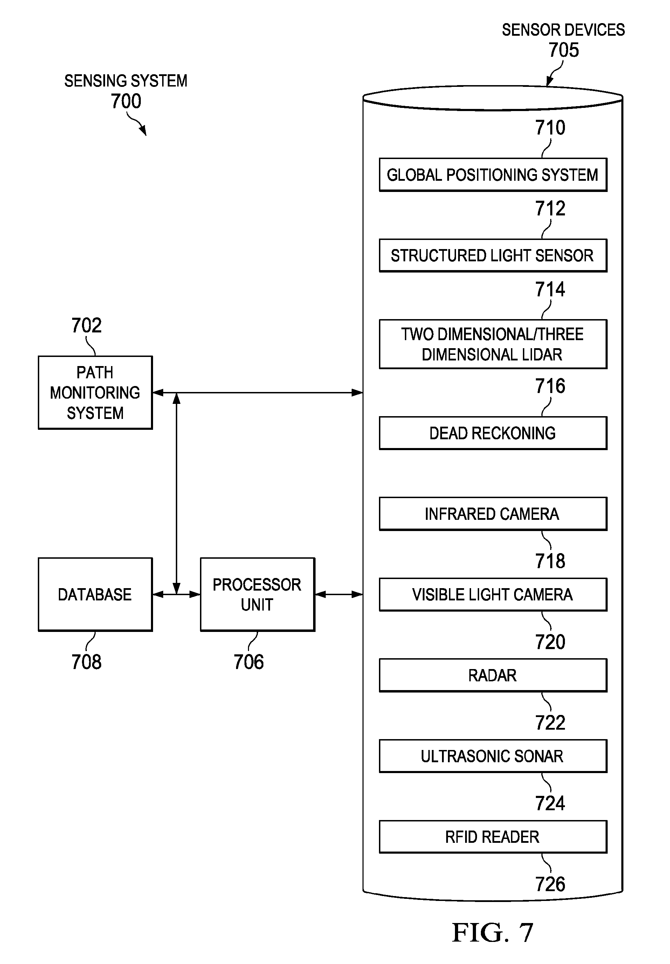

With reference now to Figure 7, an illustration of a sensor system depicted in accordance with an illustrative embodiment. Sensor system 700 may be an example of one implementation of sensor system 210 in Figure 2. Sensor system 700 includes path monitoring system 702, sensors 705, processor unit 706, and database 708. Processor unit 706 may be one example of one implementation of processor unit 604 in Figure 6.

Path monitoring system 702 monitors a path on which a vehicle moves on, such as path 254 in Figure 2. Path monitoring system 702 acquires data regarding vehicle direction, vehicle speed, and the width of the area cut by the plurality of cutting elements. Path monitoring system 702 may acquire a sequence of positions from, for example, global positioning system 710. This acquired data may be sent to a data processing system for processing and/or storage, such as data processing system 600 in Figure 6. For example, this data may be monitored continuously or periodically. Further, this data may be acquired as part of a predetermined navigational plan and stored in database 708.

In this illustrative example, sensor devices 705 and techniques using sensor devices 705 may be incorporated into path monitoring system 702. Additionally, sensor devices 705 and techniques using sensor devices 705 may also be incorporated into a sensor system, such as sensor system 210 in Figure 2. As illustrated, sensor system 700 includes sensor devices 705 which may include for example, global positioning system 710, structured light sensor 712, two dimensional/three dimensional laser detection and ranging (LIDAR)system 714, dead reckoning 716, infrared camera 718, visible light camera 720, radar 722, ultrasonic sonar 724, and radio frequency identification reader 726. These different sensors may be used to identify the worksite environment around a vehicle. These different sensors may also be used to identify the fullness of a bag in a bagging system. Sensor devices 705 in sensor system 700 may be selected such that one of the sensors is always capable of sensor information needed to operate the vehicle in different operating environments. For example, sensor system 700 may identify wind speed. When the wind speed increases, collecting waste may be less desirable.

Global positioning system 710 may identify the location of the vehicle with respect to other objects and/or obstacles in the environment. Structured light sensor 712 emits light in a pattern, such as one or more lines, reads back the reflections of light through a camera, and interprets the reflections to detect and measure obstacles in the environment. Two dimensional/three dimensional light detection and ranging system 714 is an optical remote sensor technology that measures properties of reflected light to find range and/or other information of a distant target. Dead reckoning 716 begins with a known position, which is then advanced, mathematically or directly, based upon known speed, elapsed time, and course. Infrared camera 718 detects heat indicative of a living thing versus an inanimate object. Visible light camera 720 may be a standard still-image camera, which may be used alone for color information or with a second camera to generate stereoscopic or three-dimensional images.

Radar 722 uses electromagnetic waves to identify the range, altitude, direction, or speed of both moving and fixed obstacles. Ultrasonic sonar 724 uses sound propagation on an ultrasonic frequency to measure the distance to an obstacle by measuring the time from transmission of a pulse to reception and converting the measurement into a range using the known speed of sound. Radio frequency identification reader 726 relies on stored data and remotely retrieves the data using devices called radio frequency identification (RFID) tags or transponders.

Sensor system 700 may retrieve data from one or more of sensor devices 705 to obtain different perspectives of the worksite environment. For example, sensor system 700 may obtain visual data from visible light camera 720, data about the distance of the vehicle in relation to obstacles in the environment from two dimensional/three dimensional LIDAR 714, and location data of the vehicle in relation to a map from global positioning system 710.

Sensor system 700 is configured to send data from path monitoring system 702 to processor unit 706. Processor unit 706 may be an example of one implementation of processor unit 604 in Figure 6. In these illustrative examples, processor unit 706 is configured to determine a number of waste retrieval elements to be adjusted autonomously, a height for the number of waste retrieval elements to be adjusted, a timing for the adjustment, and/or a speed of the adjustment.

The illustration of sensor system 700 in Figure 7 is not meant to imply physical or architectural limitations to the manner in which different illustrative embodiments may be implemented. Other components in addition to, and/or in place of, the ones illustrated may be used. Some components may be unnecessary in some illustrative embodiments. Also, the blocks are presented to illustrate some functional components. One or more of these blocks may be combined and/or divided into different blocks when implemented in different illustrative embodiments.

For example, in one illustrative embodiment, sensor system 700 may not include processor unit 706 and/or database 708. Data may be processed and stored separately from sensor system 700. In another example, processor unit 706 may include a plurality of processor units for processing data received. In other illustrative embodiments, sensor system 700 may include any number of sensor devices 705 working simultaneously.

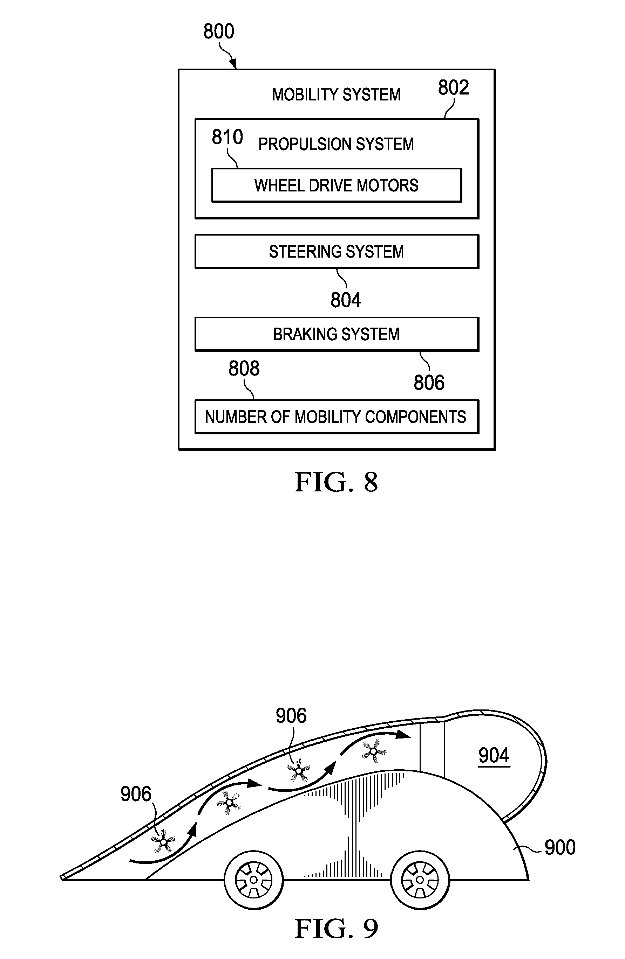

With reference now to Figure 8, an illustration of a mobility system is depicted in accordance with an illustrative embodiment. Mobility system 800 provides mobility for autonomous vehicles associated with a navigation system. Mobility system 800 may take various forms. Mobility system 800 may include, for example, without limitation, propulsion system 802, steering system 804, braking system 806, and number of mobility components 808. Propulsion system 802 may be one example of one implementation for propulsion system 248 in Figure 2. In these examples, propulsion system 802 may propel or move an autonomous vehicle, such as vehicle 204 in Figure 2, in response to commands from a controller, such as controller 268 in Figure 2.

Propulsion system 802 may maintain or increase the speed at which an autonomous vehicle moves in response to instructions received from a processor unit of a navigation system. Propulsion system 802 may be an electrically controlled propulsion system. Propulsion system 802 may be, for example, without limitation, an internal combustion engine, an internal combustion engine/electric hybrid system, an electric engine, or some other suitable propulsion system. In an illustrative example, propulsion system 802 may include wheel drive motors 810. Wheel drive motors 810 may be an electric motor incorporated into a mobility component, such as a wheel, that drives the mobility component directly. In one illustrative embodiment, steering may be accomplished by differentially controlling wheel drive motors 810.

Steering system 804 controls the direction or steering of an autonomous vehicle in response to commands received from a processor unit of a navigation system. Steering system 804 may be, for example, without limitation, an electrically controlled hydraulic steering system, an electrically driven rack and pinion steering system, a differential steering system, or some other suitable steering system. In an illustrative example, steering system 804 may include a dedicated wheel configured to control number of mobility components 808.

Braking system 806 may slow down and/or stop an autonomous vehicle in response to commands received from a processor unit of a navigation system. Braking system 806 may be an electrically controlled braking system. This braking system may be, for example, without limitation, a hydraulic braking system, a friction braking system, a regenerative braking system using wheel drive motors 810, or some other suitable braking system that may be electrically controlled. In one illustrative embodiment, a navigation system may receive commands from an external controller to activate an emergency stop. The navigation system may send commands to mobility system 800 to control braking system 806 to perform the emergency stop, in this illustrative example.

Number of mobility components 808 provides autonomous vehicles with the capability to move in a number of directions and/or locations in response to instructions received from a processor unit of a navigation system and executed by propulsion system 802, steering system 804, and braking system 806. Number of mobility components 808 may be, for example, without limitation, wheels, tracks, feet, rotors, propellers, wings, and/or other suitable components.

The illustration of mobility system 800 in Figure 8 is not meant to imply physical or architectural limitations to the manner in which different illustrative embodiments may be implemented. Other components in addition to and/or in place of the ones illustrated may be used. Some components may be unnecessary in some illustrative embodiments. Also, the blocks are presented to illustrate some functional components. One or more of these blocks may be combined and/or divided into different blocks when implemented in different illustrative embodiments.

With reference to Figure 9, an illustration of a vehicle associated with a bagging system is depicted in accordance with an illustrative embodiment. In this illustrative example, vehicle 900 is an example of one implementation for vehicle 204 in Figure 2. Vehicle 900 is associated with bagging system 904 in this example. Bagging system 904 is an example of a implementation for bagging system 202 in Figure 2.

In these illustrative examples, bagging system 904 is located on top of vehicle 900. In different illustrative embodiments, bagging system 904 may be located in front of, inside of, below, and/or in other positions on follower vehicle 900. In this manner, bagging system 904 may be associated with vehicle 900 in a number of different ways.

As illustrated, vehicle 900 has retrieval mechanism 906. Retrieval mechanism 906 may be configured to retrieve a plurality of items from an area, such as area 201 in Figure 2 and/or field 102 in Figure 1. In these illustrative examples, retrieval mechanism 906 is a plurality of brushes. In other illustrative examples, retrieval mechanism 906 may be other suitable devices, such as, but not limited to, a vacuum or rotating metal tines. Retrieval mechanism 906 may be an example of one implementation for retrieval mechanism 246 in Figure 2. Retrieval mechanism 906 is configured to retrieve a plurality of items and direct plurality of items into bagging system 904.

In this illustrative example, when a bag in bagging system 904 is full, the bag will be separated from bagging system 904. As one illustrative example, the bag may fall away from vehicle 900 when the bag is separated from bagging system 904. A new bag will be formed and extended to a selected length using, for example, extension system 208 in Figure 2.

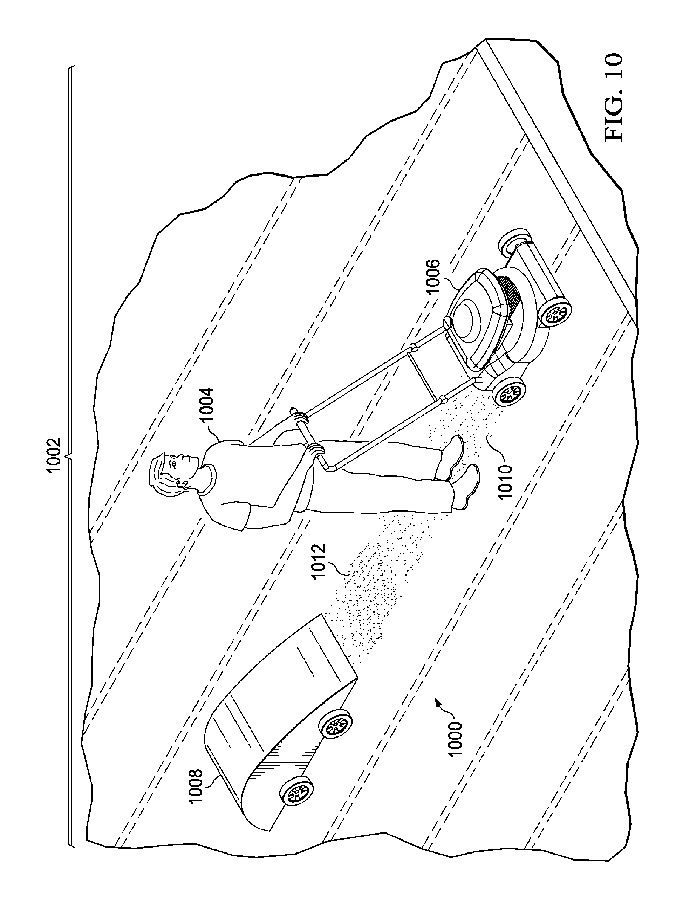

Turning now to Figure 10, an illustration of a collection environment is depicted in accordance with an illustrative embodiment. Collection environment 1000 includes field 1002, person 1004, mower 1006, and vehicle 1008. In this illustrative example, vehicle 1008 is an example of one implementation for vehicle 900 in Figure 9 and is associated with a bagging system, such as bagging system 904 in Figure 9.

Person 1004 operates mower 1006 on field 1002 to cut grass growing in field 102. Of course, in other illustrative embodiments, person 1004 may perform other operations on field 1002, such as raking field 1002, removing leaves or trash from field 1002, tilling field 1002, or some other suitable operation. Additionally, person 1004 operates mower 1006 by pushing mower 1006. However, in other illustrative embodiments, mower 1006 may be a riding mower in which person 1004 operates mower 1006 while riding on mower 1006.

In this illustrative embodiment, vehicle 1008 follows mower 1006. In other words, vehicle 1008 is a follower vehicle and mower 1006 is a leader vehicle. Vehicle 1008 has a follower system, such as follower system 252 in Figure 2. Vehicle 1008 uses this follower system to identify path 1010. Path 1010 is the path along which mower 1006 moves on field 1002.

For example, the follower system may use imaging data, positioning data, and/or some other suitable type of information to identify path 1010 for mower 1006. The positioning data may be generated using, for example, without limitation, a local positioning system, a global positioning system unit, and/or some other suitable type of positioning system.

Once follower vehicle 1008 identifies path 1010, vehicle 1008 uses a propulsion system, such as propulsion system 248 in Figure 2, to move along path 1010. While moving along path 1010, vehicle 1008 retrieves plurality of items 1012 located in the area of field 1002 located within path 1010. In this illustrative example, the plurality of items includes, for example, without limitation, grass clippings generated by mower 1006. Vehicle 1008 may retrieve the glass clipping using, for example, retrieval mechanism 246 in Figure 2.

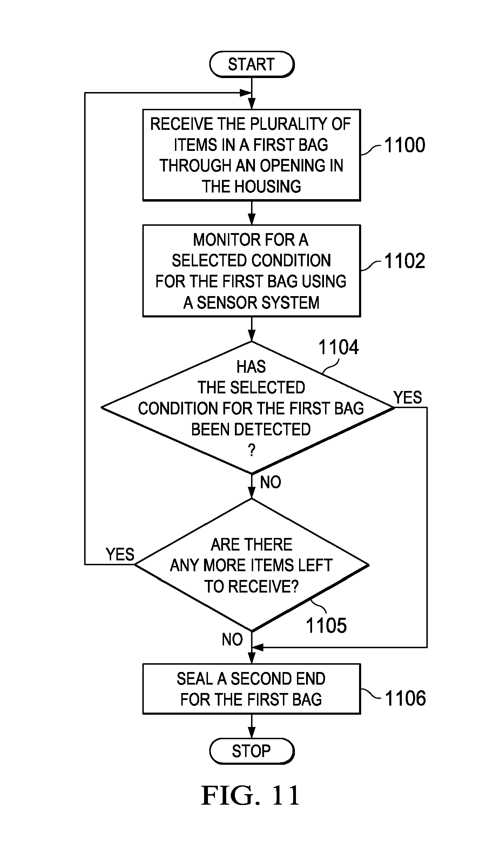

Turning now to Figure 11, an illustration of a flowchart of a process for managing a plurality of items is depicted in accordance with an illustrative embodiment. The process illustrated in Figure 11 may be implemented in collection environment 200 in Figure 2. Further, the process implemented in Figure 11 may be implemented using bagging system 202 in Figure 2.

The process begins by receiving a plurality of items in a first bag through an opening in a housing (step 1100). The housing is a housing for the bagging system. The first bag has a first end that is sealed and an opening associated with the opening in the housing. The plurality of items may be, for example, undesired material. The first end is sealed such that the plurality of items may not leave the bag through the first end.

The process then monitors for a selected condition for the first bag using a sensor system (step 1102). The selected condition may include, for example, a length for the first bag, a width for the first bag, and/or some other suitable condition. In this illustrative example, the sensor system may be sensor system 210 in Figure 2.

Thereafter, the process determines whether the selected condition for the first bag has been detected (step 1104). If the selected condition for the first bag has not been detected, the process determines whether there are anymore items left to receive (step 1105). In these illustrative examples, the process may continue to receive the plurality of items, as described in step 1100, while performing step 1102.

With reference again to step 1104, if the selected condition for the bag has been detected, the process seals a second end for the first bag (step 1106), with the process terminating thereafter. In step 1106, sealing the second end for the first bag seals a portion of the first bag between the first end and the second end for the bag.

With reference again to step 1105, if there are anymore items left to receive, the process returns to step 1100. If there are not anymore items left to receive, the process proceeds to step 1106, with the process terminating thereafter.

Further, step 1106 may be performed by adhering a first portion of the first bag to a second portion of the first bag to close the opening of the first bag and seal the portion of the first bag between the first end and the second end of the first bag. The process may adhere the first portion to the second portion using, for example, a heating process, a tying process, and/or some other suitable process. In some illustrative examples, the first portion of the bag may be adhered to the second portion of the bag using an adhesive material.

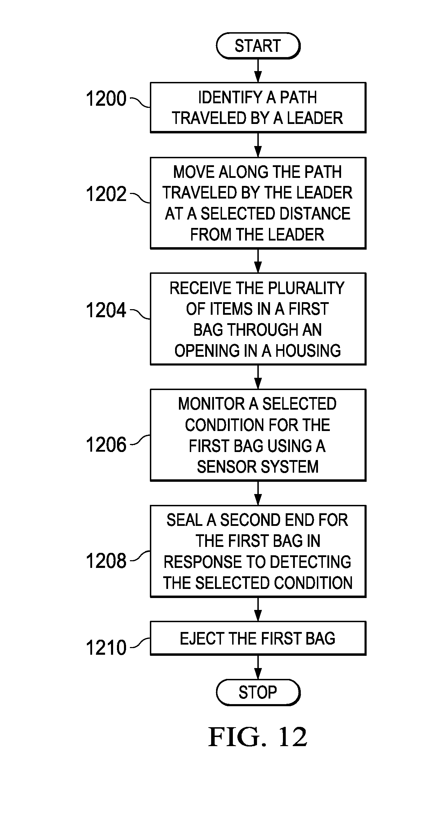

Turning now to Figure 12, an illustration of a flowchart of a process for managing a plurality of items is depicted in accordance with an illustrative embodiment. The process illustrated in Figure 12 may be implemented in collection environment 200 in Figure 2. Further, this process may be implemented using bagging system 202 in Figure 2. Additionally, this process may be implemented with bagging system 202 associated with vehicle 204 in Figure 2.

The process begins by identifying a path traveled by a leader (step 1200). The leader may be a human or a leader vehicle. As one illustrative example, the leader vehicle is a mower. The process then moves along the path traveled by the leader at a selected distance from the leader (step 1202). The process moves along the path using a propulsion system, such as propulsion system 248 in Figure 2.

Thereafter, the process receives a plurality of items in a first bag through an opening in a housing (step 1204). The housing is a housing for the bagging system. The process then monitors for a selected condition for the first bag using a sensor system (step 1206). The selected condition may include, for example, a length for the first bag, a width for the first bag, and/or some other suitable condition. In this illustrative example, the sensor system may be sensor system 210 in Figure 2. Next, the process seals a second end for the first bag in response to detecting the selected condition (step 1208). Then, the process ejects the first bag (step 1210), with the process terminating thereafter.

The flowcharts and block diagrams in the different depicted embodiments illustrate the architecture, functionality, and operation of some possible implementations of apparatus and methods in different illustrative embodiments. In this regard, each block in the flowchart or block diagrams may represent a module, segment, function, and/or a portion of an operation or step. In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved. Also, other blocks may be added in addition to the illustrated blocks in a flowchart or block diagram.

Thus, the different illustrative embodiments provide a method and apparatus for managing a plurality of items. A housing has an opening and is configured to receive a plurality of items through the opening of the housing. A first bag has a first end that is sealed and an opening. The opening of the first bag is associated with the opening of the housing. A sensor system configured to detect a selected condition for the first bag. A sealing system configured to seal a second end for the first bag in response to the sensor system detecting the selected condition. An ejection system is configured to transfer the first bag to a desired location in response to the sealing system sealing the second end for the first bag.

As a result, the different illustrative embodiments provide a method for sealing bags storing undesired material without human interaction. In this manner, the different illustrative embodiments may reduce a possibility of a bag developing an inconsistency, such a tear.

Additionally, the different illustrative embodiments allow bags of different sizes to be sealed such that humans having different strengths and/or heights may be able to carry the bags. For example, the extension system for the bagging system may be controlled by controller to adjust the selected length for the bag.

The description of the different illustrative embodiments has been presented for purposes of illustration and description, and is not intended to be exhaustive or limited to the embodiments in the form disclosed. Many modifications and variations will be apparent to those of ordinary skill in the art. Further, different embodiments may provide different advantages as compared to other embodiments. The embodiment or embodiments selected are chosen and described in order to best explain the principles of the invention, the practical application, and to enable others of ordinary skill in the art to understand the invention for various embodiments with various modifications as are suited to the particular use contemplated.

## Claims

1. A method for managing a plurality of items, **characterized by** receiving the plurality of items (218, 314) in a first bag (220, 306) through an opening (216, 312) in a housing (206, 302), wherein the first bag (220, 306) has a first end (224, 318) that is sealed and an opening (222, 316) associated with the opening (216, 316) in the housing (206, 302); monitoring for a selected condition for the first bag (220, 306) using a sensor system (210, 308); responsive to a detection of the selected condition for the first bag (220, 306), sealing a second end (235, 317) for the first bag (220, 306); and responsive to sealing the second end (235, 317) for the first bag (220, 306), transferring the first bag (220, 306) to a desired location.

2. The method according to claim 1, **characterized in that** the desired location is selected from a group consisting of a second vehicle (262), a receptacle (266), and a location that meets a number of criteria (270).

3. The method according to claim 1 or 2, **characterized in**, responsive to the detection of the selected condition for the first bag (220, 306), sealing an end (236) of a second bag (238), wherein a portion (240) of the first bag (220, 306) between the first sealed end (224, 318) and the second sealed end (235, 317) of the first bag (220, 306) is separated from the first bag (220, 306) to form the second bag (238).

4. The method according to claim 3, **characterized in** separating the portion (240) of the first bag (240) from the first bag (240) to form the second bag (238) using a separation system (213), wherein the separation system (213) comprises at least one of a number of cutters, a number of blades, a number of lasers, a number of knives, and a number of sharp edges.

5. The method according to one of the claims 1 or 4, **characterized in** extending a length (227) of the first bag (220, 306) to a selected length (228) using an extension system (208, 304).

6. The method according to claim 5, **characterized in that** the extension system (208, 304) is selected from a group comprising a pneumatic device (230) and a mechanical press (232).

7. The method according to one of the claims 1 or 6, **characterized in that** the length (227) of the first bag (220, 306) is measured from the opening (216, 316) of the housing (206, 302) to the first end (224, 318) of the first bag (220, 306).

8. The method according to one of the claims 1 or 7, **characterized in** reducing a volume of the plurality of items in the first bag (220, 306) using a compaction system (214, 400).

9. The method according to claim 8, **characterized in that** the compaction system (214, 400) is selected from a group comprising a pneumatic device (251) and a mechanical press (253).

10. The method according to one of the claims 1 or 9, **characterized in** identifying a path of a leader (256) using a follower system (252); and moving along the path of the leader (256) using a propulsion system (248).

11. The method according to one of the claims 1 or 10, **characterized in that** the sensor system (210) is selected from a group comprising a weight sensor, a laser, an optical device, an acoustic device, an optical mark, and a radio frequency identification device.

12. The method according to one of the claims 1 or 11, **characterized in that** the selected condition includes at least one of a length for the first bag (220, 306) and a weight for the first bag (220, 306).

13. The method according to one of the claims 1 or 12, the step of sealing the second end (235, 317) for the first bag (220, 306) in response to the sensor system (210, 308) detecting the selected condition are **characterized by** adhering a first portion (237) of the first bag (220, 306) to a second portion (239) of the first bag (220, 306) to close the opening (222, 316) of the first bag (220, 306) and seal the portion of the first bag (220, 306) between the first end (224) and the second end (235, 317) of the first bag (220, 306).

14. The method according to claim 13, the step of adhering the first portion (237) of the first bag (220, 306) to the second portion (239) of the first bag (220) to close the opening (222, 316) of the first bag (220, 306) and seal the portion of the first bag (220, 306) between the first end (224) and the second end (235) of the first bag (220, 306) are **characterized by** heating the first portion (237) of the first bag (220, 306) and the second portion (239) of the first bag (220, 306) to melt the first portion (237) of the first bag (220, 306) and the second portion (239) of the first bag (220, 306) together.

15. An apparatus comprising a housing (206, 302) having an opening (216, 316) and configured to receive a plurality of items (218, 314) through the opening (216, 316) of the housing (206, 302); a first bag (220, 306) having a first end (224, 318) that is sealed and an opening (222, 316), wherein the opening (222, 316) of the first bag (220, 306) is associated with the opening (216, 316) of the housing (206, 302); a sensor system (210, 308) configured to detect a selected condition for the first bag (220, 306); a sealing system (212, 310) configured to seal a second end (235, 317) for the first bag (220, 306) in response to the sensor system (210, 308) detecting the selected condition; and an ejection system (260), **characterized in that** the apparatus is being configured to perform the method according to one of the claims 1 to 14.
